# EUROPEAN PATENT APPLICATION

(11) **EP 1 731 781 A1**
(43) Date of publication of application: **13.12.2006**
(21) Application number: 06076139.2
(22) Date of filing: 31.05.2006
(51) Int. Cl.: F16D 3/205

(54) **Tripot joint retainer**

(30) Priority: 10.06.2005 US 689707 P
(71) Applicant: Delphi Technologies, Inc., Troy, Michigan 48007 (US)
(72) Inventor: Perrow, Scott J., Freeland, MI 48623 (US)
(74) Representative: Denton, Michael John

(57) **Abstract**

A stroking constant velocity universal joint assembly (10) is provided including a drive member (24) having a plurality of circumferentially spaced rotatable drive elements (22), and a drive housing (12) disposed about the drive elements (22). The drive housing (12) has an inner wall formed with a plurality of circumferentially spaced drive channels (18). The drive channels (18) have running surfaces (20) extending axially of the housing to an open end (12b) thereof and which guide the rotatable drive elements (22) for stroking movement within the drive housing (12). A retainer assembly (100) is provided including a ramped surface (114) extending along each drive channel (18) for gradually narrowing a span of the drive channel, to maintain a respective drive element (22) within the housing (12). In another aspect of the invention, a retainer assembly (100) is provided for retaining a drive member (24) within a drive housing (12) of a stroking universal joint (10). The retainer assembly (100) includes a base portion and a plurality of ears (110) projecting from the base portion. Each ear (110) has a first surface (111) and a second surface (114) opposite the first surface, the second surface (114) being inclined with respect to the first surface. The second surface (114) is adapted for engaging a portion of the drive member (24) to retain the drive member within the drive housing (12).

## Description

### TECHNICAL FIELD

The present invention relates to a retainer assemblies for use with a stroking universal joints and, more particularly, to a system for retaining a spider assembly within a housing in a tripot-type universal joint.

### BACKGROUND OF THE INVENTION

Stroking universal joints are well-known in the art. One such type of stroking joint is a tripot-type joint, which generally includes a housing defining a plurality of elongated drive channels and a spider assembly retained within the housing. The spider assembly includes rollers disposed in the drive channels for allowing relative longitudinal movement along the drive channels between the spiders and the housing. A splined shaft is typically connected to an interior hub in the spider assembly. Similarly, a splined shaft is connected to the housing. Relative rotational movement is transmitted between the splined shafts through the spider and housing assembly. The movable spider assembly allows for relative longitudinal movement between the two splined shafts. This axial movement or stroke is required for changes in distance during normal suspension movement.

One issue with tripot joints is the possibility that they may become over-extended during the assembly process or during motion of the vehicle in which they are installed. This over-extension occurs when the spider assembly is forced to stroke beyond the end of the housing, thereby exiting the drive channels and resulting in loss of function of the joint. It is desirable to prevent the spider assembly from exiting the housing during stroking of the joint.

### SUMMARY OF THE INVENTION

A stroking constant velocity universal joint assembly is provided including a drive member having a plurality of circumferentially spaced rotatable drive elements, and a drive housing disposed about the drive elements. The drive housing has an inner wall formed with a plurality of circumferentially spaced drive channels. The drive channels have running surfaces extending axially of the housing to an open end thereof and which guide the rotatable drive elements for stroking movement within the drive housing. A retainer assembly is provided including a ramped surface extending along each drive channel for gradually narrowing a span of the drive channel, to maintain a respective drive element within the housing.

In another aspect of the invention, a retainer assembly is provided for use in a stroking universal joint of the type having a drive spider assembly with a plurality of circumferentially spaced trunnions and a drive housing member having an interior wall surrounding the spider assembly. A plurality of elongated drive channels is formed in the interior wall of the housing member, and each of the spider assembly trunnions has a drive roller rotatably mounted thereon and respectively disposed for linear travel in an associated one of the drive channels. The retainer assembly includes a plurality of ears, each of the ears being adapted for extending along a running surface of a corresponding drive channel. Each of the ears includes an end portion positioned spaced apart from the housing open end and a ramped surface extending away from the running surface along a first direction proceeding from the ear end portion toward the housing open end so as to engage a drive element moving in the first direction, to urge the drive element away from the running surface.

In yet another aspect of the invention, a retainer assembly is provided for retaining a drive member within a drive housing of a stroking universal joint. The retainer assembly includes a base portion and a plurality of ears projecting from the base portion. Each ear has a first surface and a second surface opposite the first surface, the second surface being inclined with respect to the first surface. The second surface is adapted for engaging a portion of the drive member to retain the drive member within the drive housing.

### BRIEF DESCRIPTION OF THE DRAWINGS

In the drawings illustrating embodiments of the present invention:
FIG. 1 is an exploded view of a tripot-type universal joint assembly showing an embodiment of a retainer system in accordance with the present invention;
FIG. 2 is a partial cross-sectional end view showing a spider assembly inserted into a housing, with a retainer system in accordance with the present invention secured to the housing;
FIG. 3 is a partial perspective view showing the spider assembly inserted into the housing, with a retainer system in accordance with the present invention secured to the housing;
FIG. 4 is a perspective view of one embodiment of a retainer system in accordance with the present invention;
FIGS. 5A-5C include a plan view and various side views of the retainer system shown in FIG. 4;
FIG. 5D is an enlarged cross-sectional view of a retaining ear as shown in FIG. 5C;
FIG. 6 is a schematic view showing attachment of the retainer system to a housing of a tripot joint system;
FIG. 7 is a partial cross-sectional view showing a portion of a retaining ear of the retainer system in accordance with the present invention extending into a drive channel; and
FIG. 8 is a schematic view showing engagement between the retainer system and a drive roller during movement of a spider assembly within the tripot joint housing.

### DETAILED DESCRIPTION

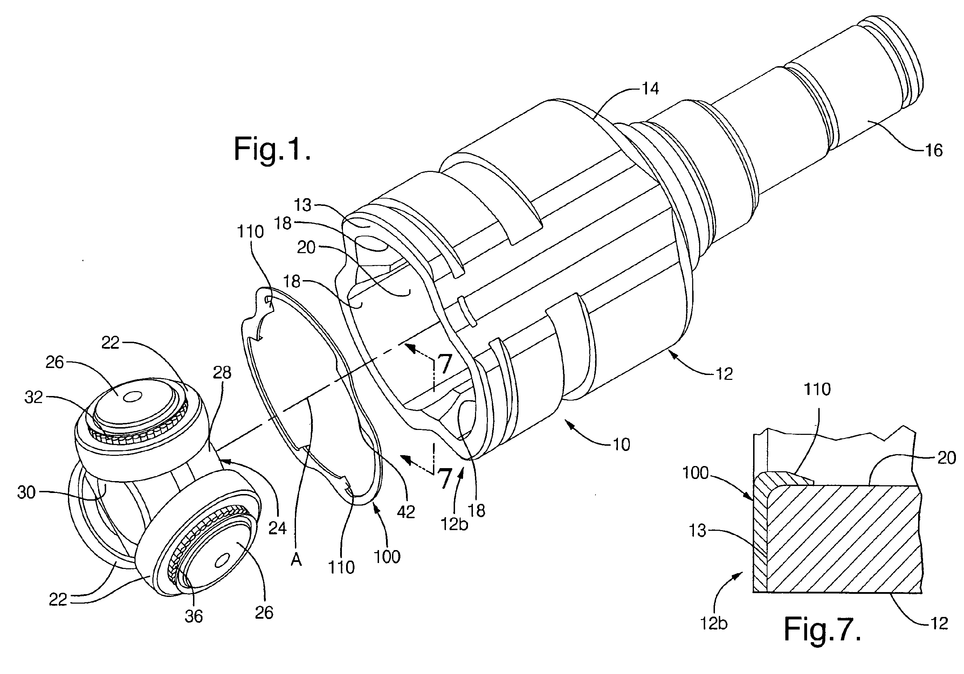

FIGS. 1-3 show the basic elements of a tripot-type universal joint assembly, generally designated 10. The tripot joint 10 includes a generally cylindrical housing 12 closed at an inboard end 12a thereof by an end wall 14. The joint 10 includes a drive shaft 16 integral with the end wall 14 that extends axially therefrom. The drive shaft 16 is preferably splined.

The housing 12 is open at an outboard end 12b and has an endface 13 and three substantially equally circumferentially spaced and longitudinally extending drive channels 18 formed in an interior wall of the housing 12. The drive channels 18 are substantially concentric about a longitudinal axis A of the housing 12 and the drive shaft 16. Each of the longitudinally extending channels 18 is bounded by a pair of opposing concave side walls 20 and a concave endwall 21 extending between sidewalls 20 which forms part of the tracks or guides that engage the curved surfaces of associated drive rollers 22 of a spider assembly, generally designated 24. Side walls 20 form running surfaces for spider assembly drive rollers 22.

The spider assembly 24 includes a hub 28 and three trunnions 26 extending radially from the hub 28. The hub 28 includes a central bore 30 that is splined for receiving a splined shaft (not shown) in any known manner. Preferably, the splined shaft is fixed within the central bore 30 and is used for transmitting rotational movement between the shaft and the hub 28.

Each of the drive rollers 22 is mounted on a trunnion 26 extending from the hub 28. Preferably, the rollers 22 are mounted on the trunnions 26 with a complement of needle bearings 32 interposed between the inner diameter of the roller 22 and the outer cylindrical surface of the associated trunnion 26. Annular retainers 36 are secured to the outer end of each trunnion 26 to retain the needle bearings 32 in location and to limit the radial outward movement of the associated roller 22 on the trunnion 26. The drive rollers 22 are thus rotatable on the trunnions 26 to allow axial movement of the spider 24 in the housing 12, thereby permitting universal stroking and pivotal movement of the joint. With the above described assembly, each drive roller 22 is captured in the radial direction in its associated drive channel and is maintained substantially equidistant from the longitudinal axis A during joint operation.

While the above-described embodiment uses drive rollers 22 and needle bearings 32 to facilitate motion of the spider assembly along the housing interior, it will be appreciated that other types of roller systems capable of facilitating rolling motion along the drive channels may be used in accordance with the present invention.

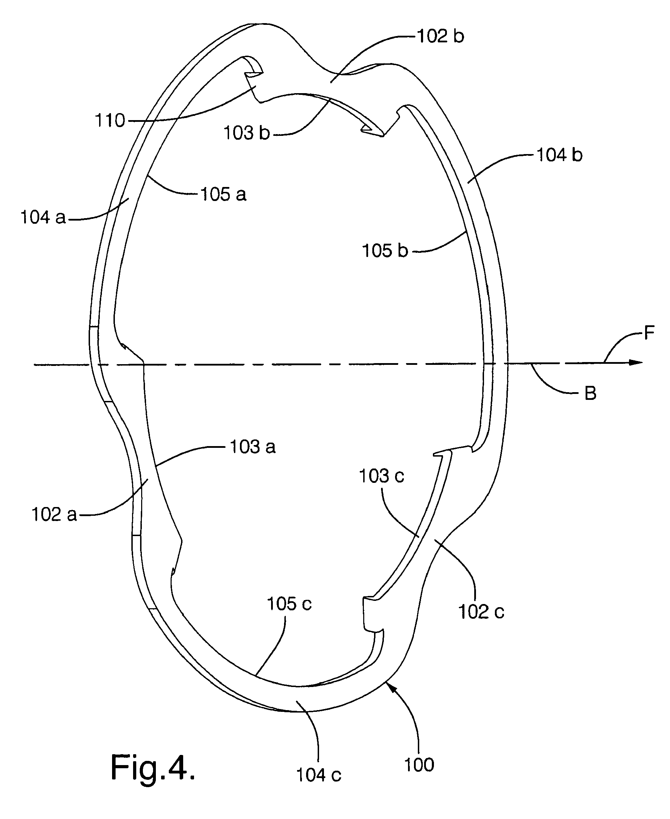

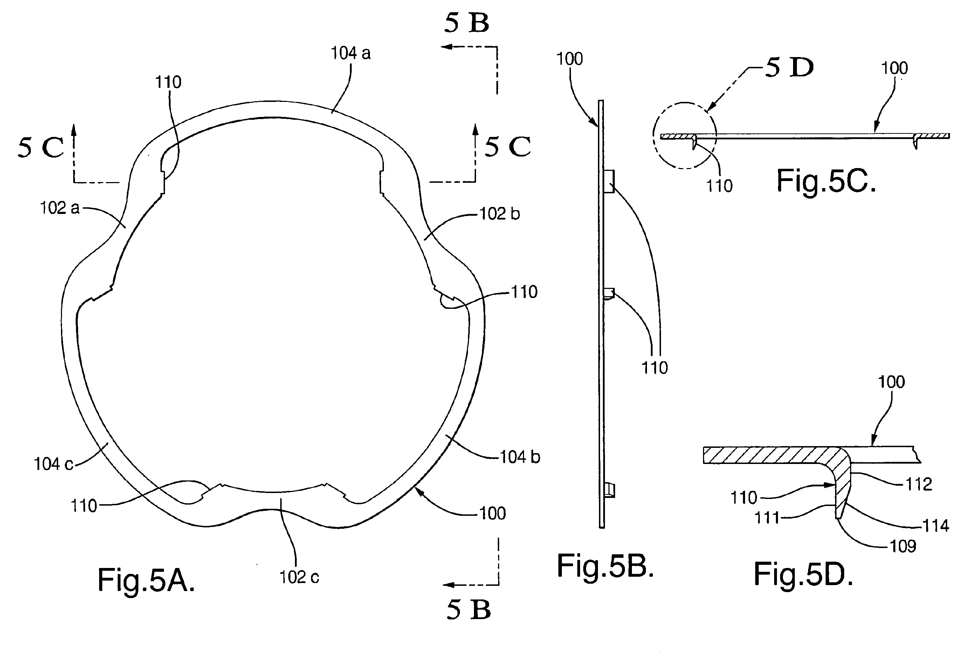

To maintain spider assembly 24 within the housing 12, a novel retaining system is used. In the embodiment shown in FIGS. 4 and 5A-5C, the retaining system comprises an annular structure 100 having a base portion and a plurality of flaps or ears 110 projecting from the base portion. The base portion also has a plurality of circumferentially spaced-apart first arcuate segments 102a-102c and a plurality of circumferentially spaced-apart second arcuate segments 104a-104c. Each one of first segments 102a-102c is connected at an end thereof to a respective one of second segments 104a-104c. In the embodiment shown in FIGS. 4 and 5A-5C, second segments 104a-104c are generally coplanar with each other and with first segments 102a-102c. However, depending on design requirements, any of second segments 104a-104c may lie on a plane different from any of the other second segments 104a-104c, and any of first segments 102a-102c may lie on a plane different from any of the other first segments 102a-102c. In addition, any of the first segments 102a-102c may lie on a plane different from any of second segments 104a-104c. First segments 102a-102c and second segments 104a-104c are substantially concentric about a longitudinal axis B (as shown in FIG. 4). When annular structure 100 is secured to housing 12, axis B is substantially coaxial with axis A of housing 12.

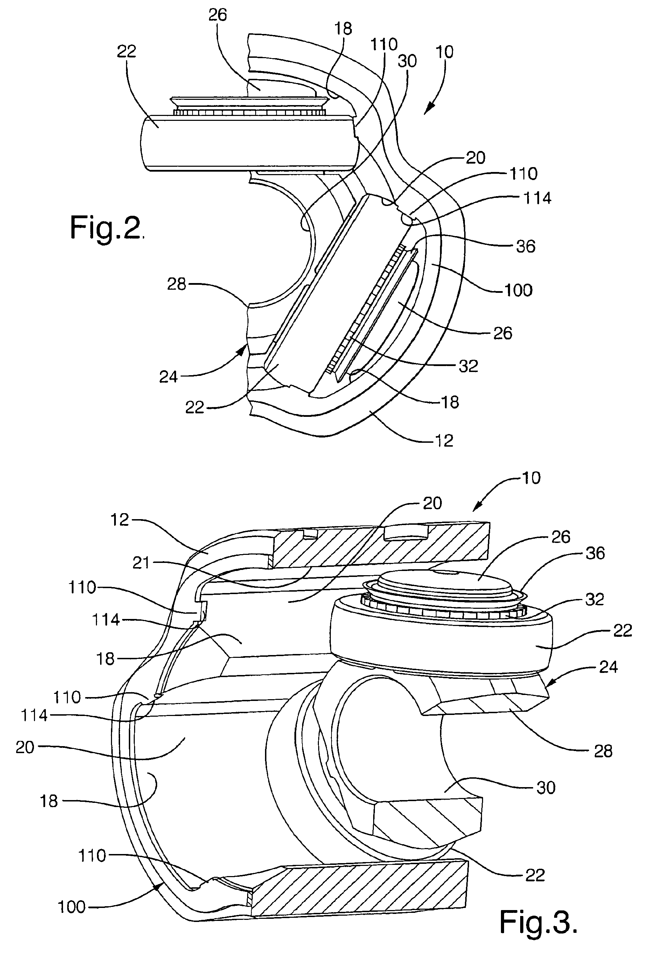

Referring again to FIGS. 4 and 5A-5D, retainer assembly 100 includes a flap or ear 110 formed at each end of each of first segments 102a-102c. In general, each ear 110 is formed integral with the remainder of annular structure 100 as shown in FIG. 5D, so as to extend inward into a corresponding drive channel 18 along respective drive channel sidewalls or running surfaces 20 (see FIG. 1) when annular structure 100 is positioned and retained against housing endface 13, as described below. Referring in particular to FIG. 5D, each ear 110 has a first relatively straight surface 111 extending generally parallel with axis B (FIG. 4) and a second surface 114 opposite first surface 111 and inclined with respect to the first surface. Surface 114 is coined or otherwise suitably deformed to provide an angle or ramp extending away from first surface 111 and away from an associated running surface 20 the drive channel 18 proceeding along the direction indicated by arrow F (see FIG. 4) from a free end 109 of ear 110 toward the open end 12b of housing 12 (see FIG. 1). Ramped surface 114 is configured to engage a drive element moving in the direction of arrow F, to urge the associated drive element 22 away from running surface 18. As defined herein, an ear 110 is considered to extend "along" an associated running surface 20 if the ear is either in contact with the running surface, or extends adjacent the running surface and is spaced a sufficiently small distance apart from the running surface such that a drive roller moving along an associated drive channel 18 toward housing open end 12b will engage ramped surface 114 and be urged away from the running surface as it proceeds toward housing open end 12b. A third surface 112 intersects second surface 114 and extends substantially parallel to first surface 111. In a particular embodiment, shown in FIGS. 2 and 3, ramped surfaces 114 are positioned in opposition to each other across the width or span of an associated drive channel 18.

In alternative embodiments (not shown), ears 110 may be formed at each end of each second segment 104, or instead of an ear formed at each end of first segments 102a-102c, one or more of first segments 102 or second segments 104 may have a single ear formed at a single end thereof.

In all, the annular structure 100 shown in FIGS. 4 and 5A has a trilobal shape with three first segments 102a-102c and three second segments 104a-104c. In the embodiment shown in FIGS. 4 and 5A, first segments 102a-102c have respective inner radii of curvature 103a-103c and second segments 104a-104c have respective inner radii of curvature 105a-105c. In addition, the inner radii of curvature 103a-103c of respective first segments 102a-102c are substantially equal to each other, the inner radii of curvature 105a-105c of respective second segments 104a-104c are substantially equal to each other, and the inner radii of curvature 103a-103c of respective first segments 102a-102c are smaller than the inner radii of curvature 105a-105c of respective second segments 104a-104c.

In additional alternative embodiments (not shown), depending on design considerations, inner radii of curvature 103a-103c of respective first segments 102a-102c may be different from each other, and inner radii of curvature 105a-105c of respective second segments 104a-104c may be different from each other. In addition, an inner radius of curvature of one or more of second segments 104a-104c may be the same as or larger than an inner radius of curvature of one or more of first segments 102a-102c. However, any chosen combination of first segment inner radii, second segment inner radii, the positions of first segments 102 and second segments 104 with respect to central axis B, and the locations of ears 110 should not interfere with motion of a splined shaft (not shown) attached to hub central bore 30.

Annular structure 100 may be formed from a metallic material using conventional stamping and bending techniques well-known to those skilled in the art. Alternatively, the annular structure may be formed partly from a polymer material and partly from a metallic material insert molded or otherwise attached to the polymer portion of the retaining system.

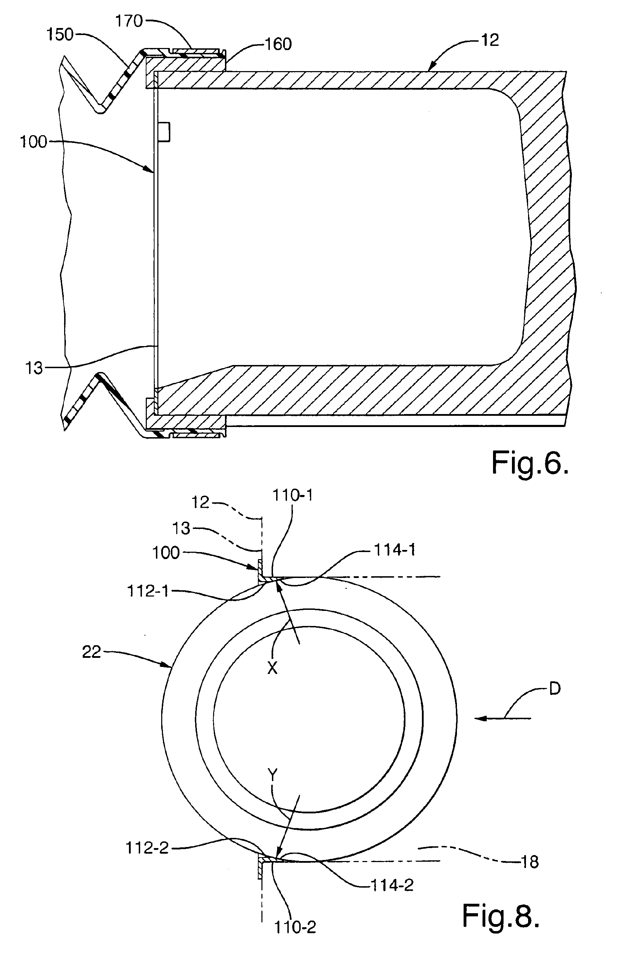

Referring to FIG. 6, when coupled to housing 12, annular structure 100 is held against housing endface 13 in a conventional manner using, for example, a boot 150 or bushing 160 secured to housing 12 using a clamp 170. Alternatively, ears 110 may be formed so as to generate an interference fit between annular structure 100 and housing 12, to aid in retention of annular structure 100 to endface 13.

FIG. 7 shows extension of one of ears 110 into an associated drive channel of housing 12, and FIG. 8 shows engagement between ears 110 and a drive roller 22 during stroking motion of a drive roller within a single drive channel 18. However, it will be understood that the retaining system shown in FIG.8 operates in a similar manner in all drive channels 18 of the tripot joint assembly. Referring to FIG. 8, as drive roller 22 moves in the direction indicated by arrow D (toward an open end 12b of housing 12), the drive roller engages ramps 114-1, 114-2 formed along ears 110-1, 110-2 and rides along the ramps toward the respective ear surfaces 112-1, 112-2, thereby exerting forces on the ramps in the directions indicated by arrows X and Y (substantially perpendicular to the ramped surfaces 114-1, 114-2.) These forces press ears 110-1, 110-2 firmly against sidewalls 20 of drive channel 18, thereby wedging the ears between the drive roller 22 and drive channel walls 20. In this respect, retaining ring 100 is self-securing during use, because attempted withdrawal of drive roller 22 from housing 12 (which annular structure 100 is designed to prevent) provides forces for securing the annular structure to housing 12 during the attempted withdrawal of the drive roller. This minimizes the force required for securing annular structure 100 to housing endface 13 by the bushing or boot and the accompanying housing clamp.

Also, as seen From FIG. 8, ramped surfaces 114-1, 114-2 effectively gradually narrow the effective width or span of the drive channel during movement of an associated drive roller 22 in direction D within the channel, because the drive roller will not fit through the gap between the respective surfaces 112-1 and 112-2 of opposing ears 110-1 and 110-2. Thus, the drive roller becomes wedged between ramped surfaces 114-1 and 114-2 and withdrawal of drive rollers 22 and inner drive spider 14 from housing 12 is prevented.

In an alternative embodiment (not shown), in an embodiment where a single ear 110 is formed at one respective end of each of first segments 102a-102c, engagement between a ramped surface 114 and an associated drive roller 22 produces abutting engagement between the drive roller and an interior surface of the drive channel, thereby wedging the drive roller between the ramped surface and the interior surface of the drive channel and preventing withdrawal of the drive roller from housing 12. In this embodiment, engagement with the ramped surface may force the drive roller into engagement with a surface of the drive channel located directly opposite the ramped surface and/or with one or more other interior surfaces of the drive channel not positioned directly opposite the ramped surface.

It may be seen that, as drive rollers 22 move toward housing open end 12b, ramped surfaces 114 engage the drive rollers such that impact of the rollers into the otherwise relatively blunt ends of ears 110 is either eliminated or substantially reduced. This provides smoother operation of the tripot joint, and reduces the likelihood of spalling occurring along the outer faces of drive rollers 22 due to impact with end portions of the retaining ears. In addition, the retaining system described above does not require the formation of special retaining grooves on the housing, thereby making the retainer assembly easier to couple to the housing than existing retainer designs, and also reducing the manufacturing cost of the housing.

It will be understood that the foregoing description of the present invention is for illustrative purposes only, and that the various structural and operational features herein disclosed are susceptible to a number of modifications, none of which departs from the spirit and scope of the present invention. The preceding description, therefore, is not meant to limit the scope of the invention. Rather, the scope of the invention is to be determined only by the appended claims and their equivalents.

## Claims

1. A stroking constant velocity universal joint assembly (10) comprising:
a drive member (24) having a plurality of circumferentially spaced rotatable drive elements (22);
a drive housing (12) disposed about the drive elements (22), the drive housing (12) having an inner wall formed with a plurality of circumferentially spaced drive channels (18) having running surfaces (20) extending axially of the housing (12) to an open end (12b) thereof and guiding the rotatable drive elements (22) for stroking movement within the drive housing (12); and
a retainer assembly (100) including a ramped surface (114) extending along each drive channel (18) for gradually narrowing a span of the drive channel (18) to maintain a respective drive element (22) within the housing (12).

2. The joint assembly (10) of claim 1 further comprising an additional ramped surface (114) extending from the retainer assembly (100) along one of the drive channels (18) for gradually narrowing the span of the drive channel (18), thereby providing a pair of ramped surfaces (114) extending along a single drive channel (18).

3. The joint assembly (10) of claim 2 wherein the ramped surfaces (114) of the pair of ramped surfaces are positioned in opposition to each other across the span of the drive channel (18).

4. The joint assembly (10) of claim 1 wherein engagement between the ramped surface (114) and the respective drive element (22) produces engagement between the drive element (22) and a surface of the drive channel (18), thereby wedging the drive element (22) between the ramped surface (114) and the surface of the drive channel (18).

5. The joint assembly (10) of claim 4 wherein the surface of the drive channel (18) is positioned opposite the ramped surface (114).

6. A retainer assembly (10) for use in a stroking universal joint of the type having a drive spider assembly (24) with a plurality of circumferentially spaced trunnions (26) and a drive housing member (12) having an interior wall surrounding the spider assembly (24), a plurality of elongated drive channels (18) in the interior wall of the housing member (12), with each of the trunnions (26) having a drive roller (22) rotatably mounted thereon and respectively disposed for linear travel in an associated one of the drive channels (18), the retainer assembly (10) comprising:
a plurality of ears (110), each of the ears (110) being adapted for extending along a running surface (20) of a corresponding drive channel (18) of the plurality of drive channels, each of the ears (110) including an end portion (109) positioned spaced apart from an open end (12b) of the housing (12) and a ramped surface (114) extending away from the running surface (20) along a first direction proceeding from the ear end portion (109) toward the housing open end (12b) so as to engage a drive element (22) moving in the first direction to urge the drive roller (22) away from the running surface (20).

7. A retainer assembly (10) for retaining a drive member (24) within a drive housing (12) of a stroking universal joint, the retainer assembly (10) comprising:
a base portion; and
a plurality of ears (110) projecting from the base portion, each ear (110) of the plurality of ears having a first surface (111) and a second surface (114) opposite the first surface (111), the second surface (114) being inclined with respect to the first surface (111), the second surface (114) being adapted for engaging a portion of the drive member (24) to retain the drive member (24) within the drive housing (12).

8. The retainer assembly (10) of claim 7 further comprising a third surface (112) intersecting the second surface (114) and extending substantially parallel to the first surface (111).
